# EUROPEAN PATENT APPLICATION

(11) **EP 1 914 652 A1**
(43) Date of publication of application: **23.04.2008**
(21) Application number: 06122358.2
(22) Date of filing: 16.10.2006
(51) Int. Cl.: G06F 21/00

(54) **A management method, system, computer program product and computer readable medium for administering the control of software modules to individual electronic hardware devices**

(71) Applicant: Linkage A/S, 1456 Copenhagen K (DK)
(72) Inventor: Poulsen, Eigil Rosager, DK-2100, Copenhagen Ø (DK); Damsgaard, Morten, DK-1363, Copenhagen K (DK)
(74) Representative: HOEIBERG A/S

(57) **Abstract**

The present invention concerns a management method for administering the supply of software modules and licences to unlock features (2) to individual electronic hardware devices (3), comprising the steps of: storing electronic hardware device information (4), such as type; storing software module information (5), such as version number, content, date of release, and/or the like, for an identification of software modules (2); providing a device database (6), comprising individual device identifiers (7) and their corresponding selection of said electronic hardware device information (4) and said software module information (5); providing a user interface (102) for at least selecting a software module to be delivered to said individual hardware device (3); updating said device database to identify the selected software module; and providing said selected software module to said specific electronic hardware device.

## Description

### Field of invention

The present invention relates to a management system and method for the administration of the control of software feature availability and supply of software modules to individual electronic hardware devices.

### Background of invention

In the context of the present invention, the term "hardware device" means a physical electronic device which is able to receive software modules, i.e. application software in the form of code or computer programs, in any form or type on a memory and processor combination provided with the device, which device may be small, medium or large sized stand alone devices, such as medical apparatus, scientific measuring devices, controlling and processing devices in large scale facilities, such as within the food industry, and the like, where said term also comprises hardware devices comprising software updateable embedded systems.

A hardware device generally comprises physical components, such as for example housing, interface means such as a display and input/output devices, communication means such as modems or network interfaces, means for interaction with the physical world such as measuring and control devices, means for storing and running said software, and the like. Said electronic hardware device may be adaptable for new and future modifications and supplement devices, and some components may be standard and others may be optional, the final configuration of components being decided by the hardware device manufacturer during design and development thereof.

The electronic hardware device is adapted for receiving software modules, which term in the context of the present invention is intended to mean both firmware software and application software, i.e. operating system thereon and features for operating the hardware device according to its application.

The primary focus of many device manufacturers is generally to develop new hardware devices while the installed software modules allowing the application of the device is of a secondary focus. Subsequent updates of the software is often delivered on an ad hoc basis by the device manufacturer and installed e.g. by the customer, for example when new versions including error removal and new functional features becomes available e.g. due to requests from one or more customers, due to technical developments in the field, or the like. Such software updates are often provided to the customer at a reduced price as compared to the actual development costs thereof. It may even be included in the price of the procured hardware device, i.e. it is delivered at no costs, and thus provides no steady revenue to the manufacturer. Accordingly, the price of a new device should in fact also include the estimated costs of both past and future software development, which is a problem. This is in particular the case when estimating the costs of software development performed after the delivery of the device, which includes the price of error handling and unknown future application functionality, the amount of which is difficult to pre-evaluate.

However, the focus of manufacturers is slowly shifting towards the process of software updating the hardware devices in order to provide steady revenue even after the first sale of a device. This is due to the fact that presently available devices have a rapidly increasing processing potential and thus may be post-programmed to perform even more advanced functions, e.g. not even conceived at the time of the device manufacture. At present, often far many man hours are spent on developing new software providing an increased number of features or an increased performance than man hours spent on developing new hardware devices. Accordingly, there is a risk that the total development costs will not be covered by the initial acquisition price of a device. In order to reduce this risk and the added risk of not selling enough devices to the estimated price, manufacturers have to either reduce the initial procurement price, which lowers their income, or instead base their income on a pay-per-update-policy, in which case they must keep a record of devices sold, accessible software features per device and updates sent to each individual device.

Another problem is that when the manufacturer is providing software updates for existing devices, the customers of the device manufacturer may have different needs. This may be an administrative burden for the device manufacturer to keep track of what software update has been provided to which individual device, and where he is to focus his sales efforts for existing device customers.

Many device manufacturers have realized the above problems and have attempted to solve them e.g. by developing the logistic system of their accounting system in order to include administering at least the provision of new software modules to devices. However, many of these attempts have ended because there have been problems of added administration of the input and lack of acceptance from one or more players in the organisation.

Systems for automatically installing and updating software on computer systems according to customer orders are known, see e.g. US 5,742,829 and WO 02/05184, and stock management systems are known, e.g. from US 6,882,982, and systems for production line management for manufacturing products, e.g. computers according to customer orders are known, e.g. from US 6,892,104.

US 2005/0143941 describes a management and configuration system for handling software installation and updates for individual electronic devices, in which at least part of the software modules to be configured on the device is provided by the customer, e.g. on a network, so that the device can be pre-configured and ready to use within the customer's specific application upon the receipt from the supplier of the device.

However, none of these provide a system, method, computer program product and computer loadable medium, which at every point of the device manufacturer's development, production, distribution and sales process administers and provides software modules and control of software feature availability for hardware devices on a per device basis, and which in particular is suitable for enabling a device specific sales process of software module updates and software feature availability.

Many device manufacturers have tried to implement an in house device software update management system, but have failed, because it involves the participation of many departments, such as management, development, production, and sales, as well as corresponding profit estimates.

Accordingly, it is one object of the present invention to alleviate the above problem of administering software modules and controlling access to software features and to provide a system, a method, a computer program product, and a computer loadable medium for managing the supply of software modules to hardware devices and control of software feature availability, which in an integrated way both alleviates the production process for a device manufacturer from the time of conceiving of a new device product over the software development to device product installation and to the time of sale, and reduces the man hours spent on administration of updating of software releases to customers to allow device specific software installation at an increased revenue.

### Summary of the invention

The above object has been achieved by a management system for the administration of the availability of software modules in a software implementation on a hardware device, said system comprising an option management server for handling device identification and specification of the individual devices and a software option status of each device, said server comprising data communication means for data exchange with the individual hardware devices, a software application stored on an individual hardware device, said application comprising an option management library (OML) for reading and modifying the option status, and storing the option status in license data, such as a license file, in a secured storage, and wherein said option management library (OML) comprises data communication means for data exchange with said option management server. The invention further concerns a management method as well as a computer program product and a computer readable medium for administering the supply of software modules to individual electronic hardware devices.

By the invention, differentiations in a specific hardware device may be provided by providing a choice in the software configuration and thereby the possible performance of the device. This performance can be related to the functionalities that the customer/user of the device has actually chosen and this functionality or option status may be managed by a retailer or manufacturer via the option management server. This provides a possibility of turning features in the software on or off as well as offering the possibility of downloading new software features to the device. By controlling the options, suppliers/manufacturers are able to sell new functionality to their customers by incorporating the present invention in their software device applications.

In a first embodiment, the data exchange between the option management server and said option management library comprises license data, such as a license file. Alternatively, the data exchange between the option management server and said option management library comprises an additional software application, such as one or more software modules.

In order to protect the system for being tampered with, the secured storage preferably includes encrypting the license data and storing said encrypted license data.

In an embodiment of the invention, the system is adapted to perform a method comprising the steps of: storing electronic hardware device information, such as type; storing software module information, such as version number, content, date of release, and/or the like, for an identification of software modules; providing a device database, comprising individual device identifiers and their corresponding selection of said electronic hardware device information and said software module information; providing a user interface for at least selecting a software module to be delivered to said individual hardware device; updating said device database to identify the selected software module; and providing said selected software module to said specific electronic hardware device.

Thus, on an individual device basis, the administrative burden of a device manufacturer of managing the supply of software modules and software feature availability to individual hardware devices is alleviated in all stages of the service life of the electronic hardware device: during development, production, distribution, sale and in particular subsequent sales of new features of said software module to said individual hardware device.

Thus, it is realized the potential of performing focused and device specific software updating, e.g. based on individual customer requirements and/or on the general development within each particular device field. By providing a device specific database for providing software modules and registering each software module delivered, the system is able to manage and assist in providing the correct software modules to a device customer, as needed. Preferably, the method and system is computer implemented for a fast and reliable operation and for providing direct access to the software modules needed and to the specific hardware device.

Since there is provided the possibility of performing very detailed product differentiation at a very early stage, i.e. during development of both hardware and software, in relation to the software modules to be delivered to each specific hardware device, detailed planning and in particular sales strategies may be performed to a very focused customer segment, which significantly reduces the administrative burden at the management and sales level, and further increases the possibility of a very systematic, strategically planned and focused sales work performed at the point of sale of the hardware device itself, and in particular during the sale of new or further software module features after the sale of the device.

An advantage of the invention is that the costs of software update development may be made profitable. According to the invention, because the same device may now be upgraded to a more powerful or effective device by software changes, and e.g. to different uses, depending on the update being installed.

### Detailed description

In the following, the invention is described with reference to some preferred embodiments with reference to the accompanying drawings, in which:
- figure 1: is a schematic diagram of a system according to a first embodiment of the invention;
- figure 2: is a schematic illustration of the main parties in a system according to an embodiment of the invention;
- figure 3: is a schematic diagram illustrating the option management concept according to an embodiment of the invention;
- figure 4: is a schematic diagram of an embodiment of a system according to the invention; and
- figures 5 to 24: are examples of graphic screen displays in relation to the option management system according to the invention.

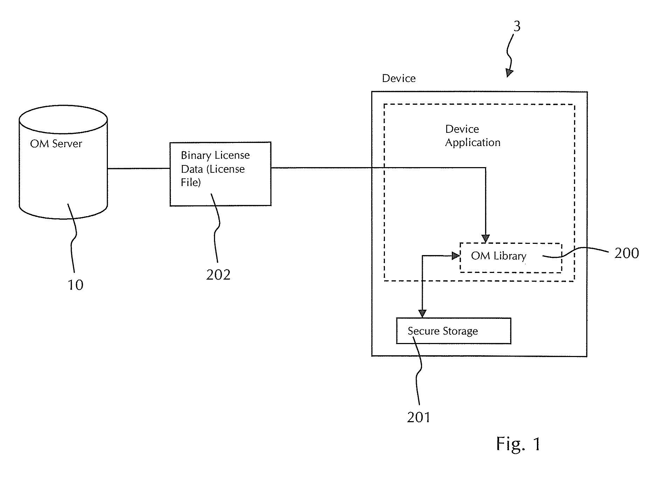

With reference to figure 1, the basic functionality of a system according to a preferred embodiment of the invention is schematically shown.

The Option Management System (OMS) is designed to provide device manufacturers with a solution to the problem of how to efficiently control software feature availability individually in any device produced. That is, if the user, i.e. either a person or an organization, wants to enable or disable specific device features in any specific device, such as for instance the feature "GPS location service" in the device with a specific serial number the OMS can designed to do so.

An "option" in the OMS is a logical entity used to identify a specific device feature. Typically an option identifies specific software functionality that is accessible or inaccessible to the user of a given device. The OMS can "unlock" options that are currently "locked", effectively making a given feature accessible to the user of the device.

The Option Management System supports three option types:
- *On-off-option* (enabled or disabled)
- *Counter* (e.g. a consumable 32 bit resource counting from 0 to a maximum value)
- *Limit* (e.g. a positive 32 bit constant)

Further option validity can be restricted by a time period:
- Relative time (legal in a certain number of days from initial usage of option)
- Absolute time (legal until an absolute date)

Examples of options:
1. A yes-no-option could be used to control access to specific functionality such as a GPS location service.
2. A counter option could be used to control the number of times a given report can be generated.
3. A limit option could be restricted by relative time, implying that a maximum of 5 network connections can be opened simultaneously during a 30 days period starting from the time the first connection is opened.

The OMS comprises many system elements. Two major elements are the OM Server 10 and the OM Library 200.

The *OM Server* 10 handles many tasks amongst which are: definition of device types (the device manufacturer's product types), device software releases, options used for each device type, devices produced and the option status for each device produced.

*OM Library* 200 is a software library that is integrated in the device application and is used to read and modify the option status for the specific device 3 running the device application. The status is used to decide whether specific device features should be accessible or inaccessible to the user of the device 3.

The Secure Storage 201 is a strongly encrypted and tamper-proof file of license information that is persisted dependent on available device hardware 3.

Option state can be modified through *license files* 202 that are generated by the OM Server 10 and imported by the OM Library 200. Through OM Library 200 the device application can inspect the status of available options, consume resources (i.e. "counter type" options) and store the current state.

The diagram in figure 1 illustrates the OMS system elements and interactions that the programmer responsible for the integration of OM Library 200 into the device software must be aware of:

The application programmer should on application startup initialize the OM Library 200 by passing it the Secure Storage 201. The binary data from the Secure Storage 201 can be read from e.g. a hard disk, a flash disk or a dongle dependent on the specific device hardware configuration 3. Initialization further requires set up of e.g. keys used to decrypt/encrypt data and hardware device ID used to bind the device software to a unique hardware platform.

When the OM Library 200 has been initialized the state of each option can be inspected and the same state can be changed through import of new license files 202 or consummation of counter options and/or consummation of time for time limited options.

In the examples in the following, examples of enabling and disabling functionality during device run-time are presented.

After OM Library initialization the library is mainly used to control whether specific device functionality is enabled or disabled.

The following pseudo-code snippets illustrate the principles by implementing the examples mentioned above.
Example 1:

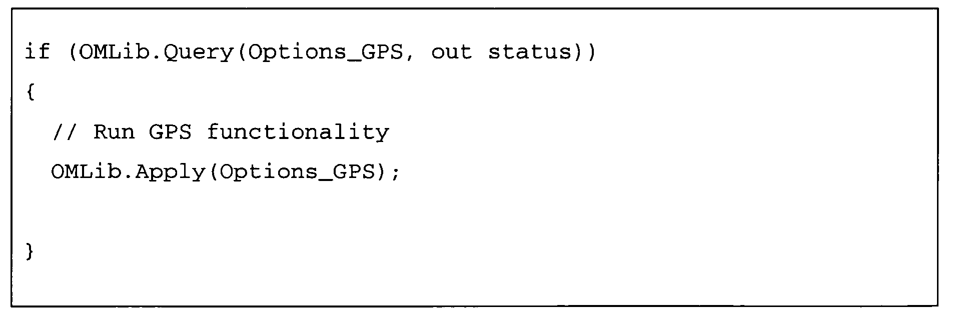

Example 2:

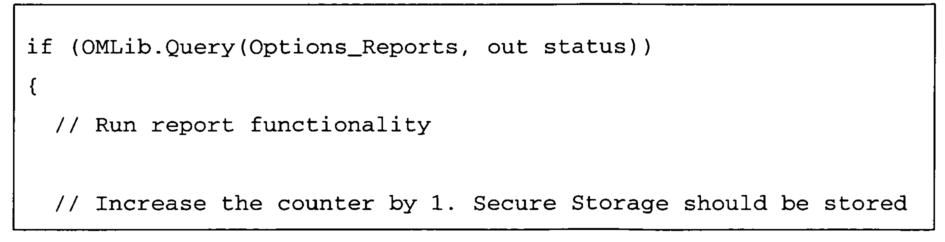

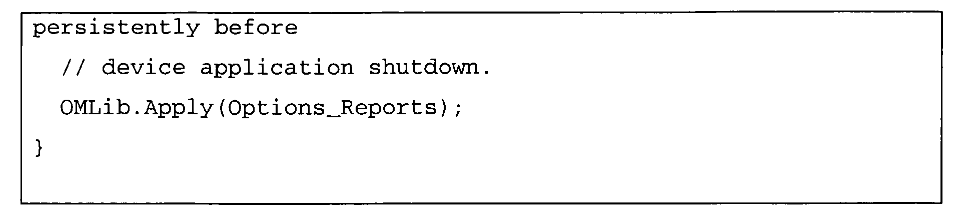

Example 3:

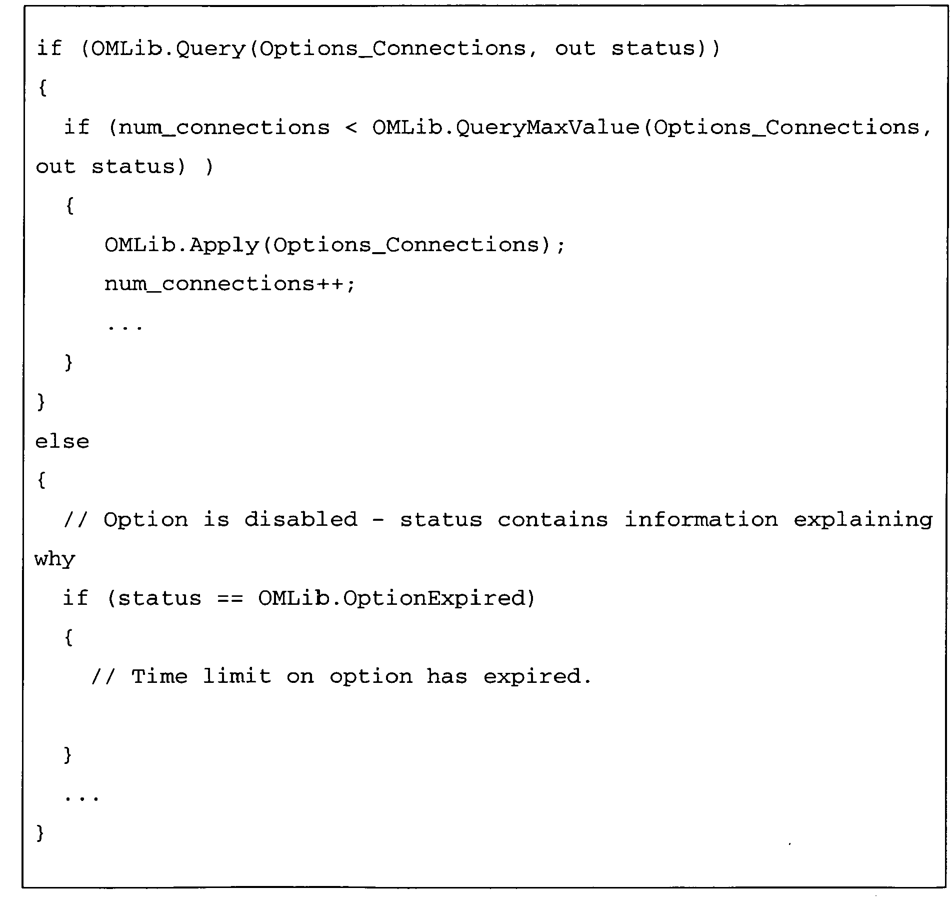

In example 3, the initial call that queries the option (Option-Connections) will activate the timer measuring the relative time limit on the option.

If the (Option-Connections) license issued for a given device isn't limited by time the above code will work without any changes and only restrict functionality based on the number of allowed connections. Furthermore, the maximum number of allowed connections can be individually specified for each license issued.

When new license data is received it should be handed to the OM Library, which imports the data and updates the state of the options on the device. After importing new license data the OM Library state has changed and should be persisted by updating the Secure Storage with the new content.

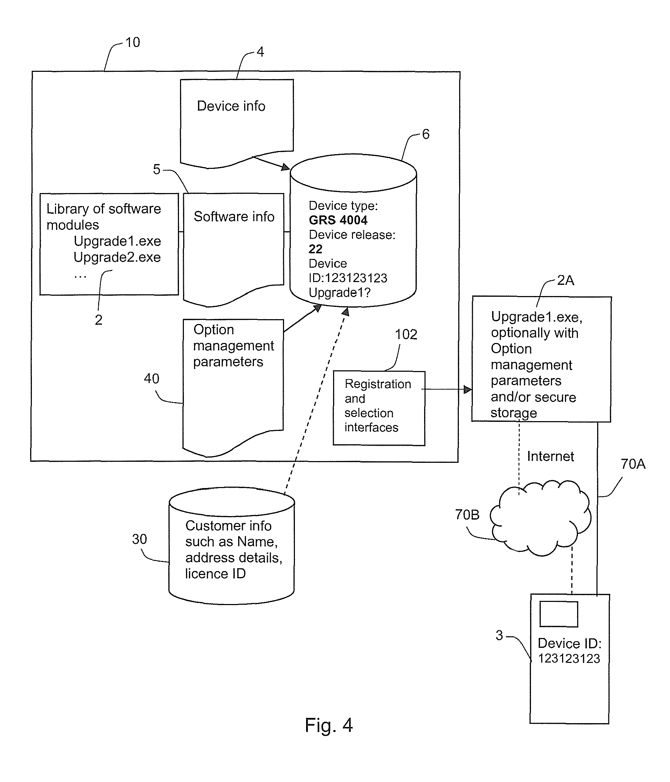

A system 1 according to the exemplary embodiment of the invention is illustrated in fig. 4. This system 1 administers and provides at least one software module 2 to a hardware device 3, which latter usually is provided externally from said system. The system 1 comprises a computer or server 10 adapted for storing and handling the following information: (a) Device information 4, such as type; (b) Software information 5, such as a tag comprising name and functionality of the software modules available or conceived, and a location indicator for identification of the available or conceived software modules; (c) A database 6 for the registration and handling of individual hardware devices manufactured or in stock, which draws on the device and software information. Further, said system comprises (d) a user interface 102 at least enabling a user to perform registration and selection of software modules 2 within the device database 6 to be output to the individual hardware device 3. This system 1 further comprises data exchange means 70A, 70B, such as a WLAN or a cable connection, between the individual device and the system 10.

Optionally, the database 6 is further in communication with a storage device, such as an invoicing system database 30, which is providing information concerning device customers, such as name, address, status, and licensing conditions in order to assist during a subsequent sale process.

The system 1 further comprises an option management application, in which the selected options may be recorded and stored and relevant ID codes unlocks the selected software modules on the device.

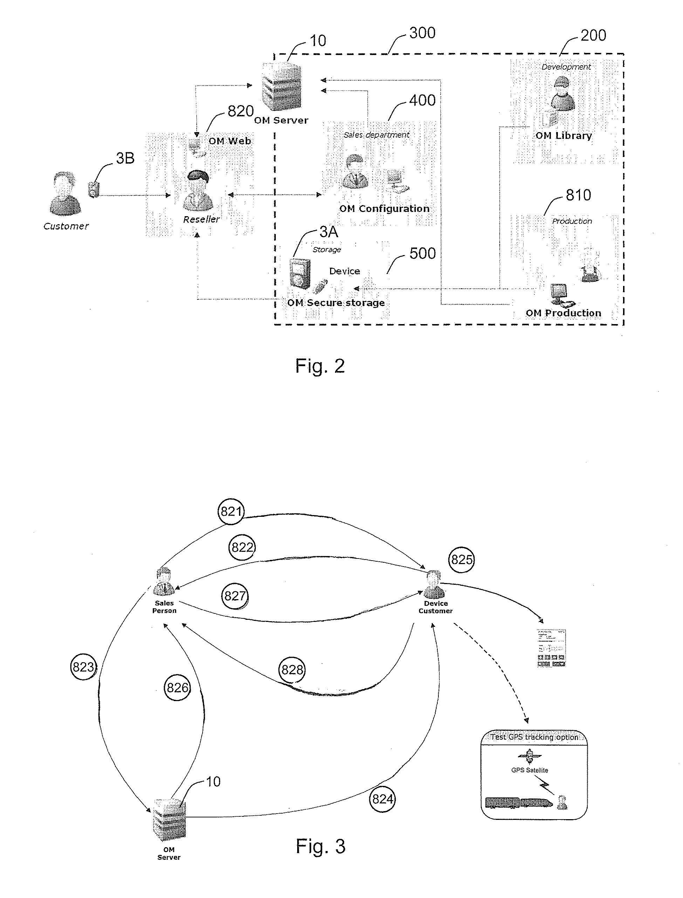

In fig. 2 is illustrated an overview of the entire system according to one embodiment of the present invention as used by a device manufacturer and its different departments.

The system 1 comprises a server computer 10 for storing, handling and providing information concerning software modules for individual electronic hardware devices. The server computer 10 may be provided by one or more computers working together in a network, such as an Intranet, or a computer network environment. The server may be any computer or processor running an application that store, maintain and allow interfaces to the information provided therein. Applications, such as, for example, a database management system (DBMS) or other similar application may organize and coordinate the storage and retrieval of data from the database. The database may be stored in a storage device. Integration with existing databases, e.g. in management computer programs, such as Customer Relation Management (CRM) and Enterprise Resource Management (ERP), may be provided, e.g. based on XML or ODBC data exchange, or the like. Other types of communication within and externally from said system 1 may be provided, such as providing a web based sales service on a web site enabling device customers and/or sale personnel to select and download the software version needed and to select and download licenses needed to unlock specific software features, and/or e-mail interfaces for automatic or manual notification and handling of web based requests.

The server computer and/or its web services may preferably be hosted by the device manufacturer in order to safeguard the information contained within, which comprise the business asset of the device production and development. Alternatively, the server computer may be provided entirely as a web based service. However, this will require increased security measures. Alternatively, only the web based sales functionality is provided externally from the server computer 10 at the device manufacturer.

The server computer 10 stores and maintains a large number of information for use by said system 1, such as device information, software information, individual device database, customer database, option type and parameters, etc. Access to this information is provided by a number of secure web or network services, which are accessible through the use of personal passwords by clients on one or more computers in order to secure and track entries, changes and developments in the information provided. Alternatively, e.g. in smaller manufacturing companies, the information may be shared without passwords in order to allow access flexibility. The information is generally accessed during device configuration and device production, see below, and possibly during a sale of a device.

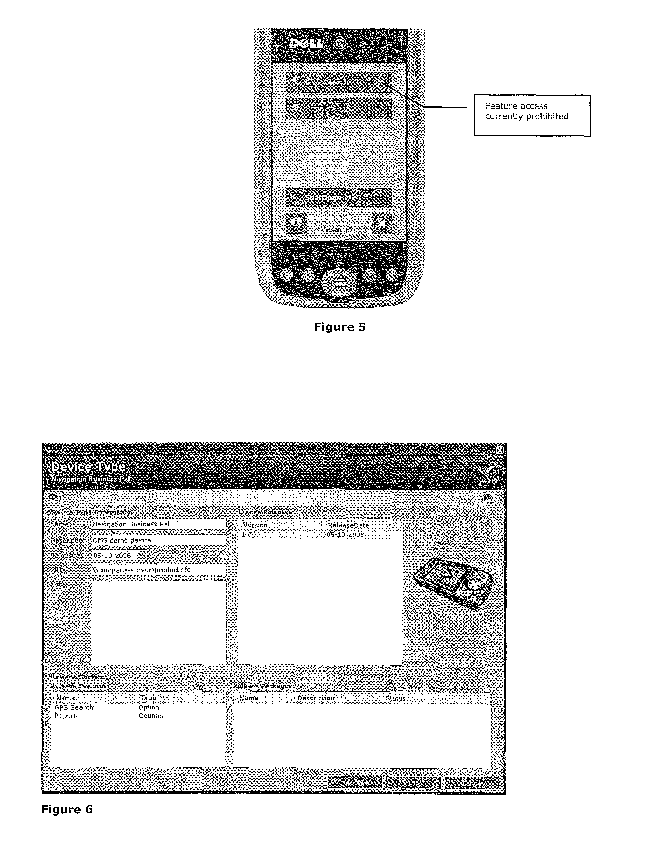

As shown in fig. 2, the system further comprises a user interface 400 for the configuration of a device 3A, e.g. a new device type, which generally is configured at the time of conception and/or after manufacture of a new device type, for example a device for measuring track profiles and comprising a new software feature of registering a measurement with an associated GPS-measurement result. The user interface 400 comprises a company network computer having a keyboard, a display and a display interface, (see e.g. figures 5 to 24). Generally, the users of the configuration user interface 400 are product management, sales and customer service personnel, and others involved with the design of the hardware and software products to be provided. The configuration user interface 400 is used to set up and configure new device types, including the software and hardware needed or provided. The interface 400 can then advantageously be used during the development of the device software, and/or during or after device production, and software installation, and in particular during the sale of new software releases and/or already installed, but not yet accessible features of the software module, as will be explained below.

The functionality of the server computer 10 using the interface 400 is accessed during configuration in order to register new device types, e.g. name, such as Navigation Business Pal, and description e.g. demo device, and software module version number 1.0, and description of anticipated features of the software module to be provided thereto such. Further, option management may be provided for the software versions available, in which case the option types available is selected for each new software version.

As shown in fig. 2, the library interface 200 provides for the identification of the available software modules, optionally including their option management types. The library 200 is generally used by the software development personnel or department for an identification and/or registration of software modules being available for download on devices. The library interface 200 allows for interaction between the data stored on server computer 10, such as device type, software version needed, and option management parameters set for the software module in question.

The library interface 200 further allows software developing personnel to check against the contemplated device design and thus check the software module to be produced, and allows for the integration or registration of the software module developed with the option management parameters set during the configuration phase. These option management parameters may be provided as pre-developed computer program code in pre-determined code segments or may be alternatively be integrated during software module development in order to apply the parameters selected during configuration to the program code being developed.

The interface 200 may be provided as a simple API with documentation in a web based application, or a simple database report providing the data for identifying the software modules needed at that point in time. It 200 may alternatively be provided fully integrated with the system 1 according to the invention, in which case at least the database registration of the developed software modules are incorporated into the system 1, or the developed software modules are provided in a library database, the performance of which is known to the skilled person. The type of library interface 200 may vary, depending on platform used, i.e. computer type, software development tool, software language and processor of the device to be produced.

As shown in fig. 2, the system 1 further may comprise a secure storage 500, e.g. a software based logical container on the individual device for the option management parameters contained within the code of the software module or modules in question, as described above. Thus, it is a term describing the selected security system to be installed on the device, e.g. provided on the server computer for installation with the software module, e.g. within the software module. The secure storage 500 hinders non-authorized persons to access and change these parameters, e.g. in order to provide longer free trial period of the software module or modules provided on the hardware device in question. It provides a secure and tamper proof container of the functionality mode of the software module or modules in question. A copy of the individual secure storage 500 may be provided with the system 1 on the server computer 10 in the form of a copy or a position of the software module delivered for the individual device. Alternatively, the secure storage is provided as a piece of dedicated hardware supplied software on the hardware device itself, e.g. a pre-programmed or etched ROM or EEPROM.

The secure storage is at least able to prevent un-authorized access to the part of the software module provided on the hardware device, in which the option management parameters have been stored or is initiated from. This may be accomplished by using encrypted data and de- and/or encryption keys in order to alter the information stored or created therein, where the process and enablement of using encrypted keys are known to the skilled person.

As shown in fig. 2, the production interface 810 enables a device initialization comprising a software download to the device of a selected software module. The production interface 810 may apart from the computer interface devices such as keyboard, display and communication with the server computer 10 comprise physical or wireless link means to the hardware device, e.g. a dedicated device download cable 8A, an Intranet or Internet link 8B, e.g. comprising modems, ISDN or ADSL, satellite, Bluetooth and/or wireless connections and devices, and/or serial links, a databus, or the like as is commonly known to the skilled person in order to enable the transfer or download of the selected software module to the individual hardware devices 3A.

Two ways of performing a link have been envisaged at this point of development. The first form being a download during production performed at the hardware device manufacturing facility, e.g. during initialization of a new device by downloading a first software module version. The second form being a post production download performed externally from the manufacturing facility, e.g. during a sales process. However, in principle, there is no difference in the way the system handles the download of one or more software modules to the respective hardware device, and thus the production stage will be described at first, while the sales process will be described further below.

The device is initialized by registering it by e.g. production identification number or the like with the individual device database 6 at the server computer 10, i.e. a new entry for the device database 6 is added. Depending on which device type is selected, by said entry, the device database is updated with the software module or modules, which previously, during configuration, has been selected to be installed for this particular device selected.

Here, a strategy of software module downloaded during production may be chosen by the device manufacturer. The types of strategies chosen may be firstly that he may choose not to download any software at delivery, i.e. no software module is delivered or a software module is delivered downloaded to the hardware device, but no functionality is provided, e.g. by setting the option management parameters to no functionality for all features. Or he may choose to download only a basal software module, i.e. one providing for basic features being available, e.g. by setting the option management to only a few basic features being available.

When using option management, the device initialization comprises a registration and initialization of the option management on each separate device by initializing the secure storage thereon.

Both if the software modules are in fact installed upon the device after download or not are within the scope of the invention. Generally, a device customer or his personnel will be instructed in installing the software modules correctly on the hardware device, e.g. utilizing a web based or physical manual. Alternatively, the software module or modules are installed automatically in a way known to the skilled person. However, an automatic installation may be preferred when using option management in order to make sure the customer receives a correct installation.

A model of the device manufacturer's process of utilizing said system according to the invention is shown diagrammatically in fig. 3. The system has been integrated into the device manufacturer's server system, and initial software has been communicated to the device customer for his device.

The advantages of this embodiment include in particular enabling a product differentiation on a per device basis, i.e. a management and control of different functionalities of the software modules being provided to the device. This in turn enables that available functionalities of the device may be differentiated.

As shown in fig. 3, a sales process using the system and performing the method according to the invention may proceed as follows:
In a first step 821, the sales person suggests to the device customer, that he tries the GPS tracking feature for his device for a demonstration and test period.
In a second step 822, the device customer accepts and confirms the device identification number to the sales person.
In a third step 823, the sales person requests that a digital key be generated by the system 1 in order to enable the GPS tracking feature to become available on the individual hardware device identified by the device identification number for a given trial time period.
In a fourth step 824, the server computer 10 generates the requested digital key and e.g. e-mails it to the device customer for unlocking the GPS feature already installed in the device, but not enabled before the arrival of the digital key.
In a fifth step 825, the device customer enters in the digital key provided by the sales person, and unlocks the GPS feature for immediate use in said trial period, say three months.
In a sixth step 826, after the trial period of three months the server computer provides a message to the sales department, that the trial period for the GPS feature for the device in question is about to expire.
In a seventh step 827 a sales person responds to said message by contacting said device customer again, enquiring whether he would be interested in the GPS feature permanently and buy a licence therefore.
In an eighth step 828, the device customer has grown accustomed to and realized the potential of using the GPS tracking feature, and decides to buy a permanent licence for this feature.
In a case where the device customer does not want to continue using the GPS functionality, no action is needed, because the option management parameters downloaded in the software module of the hardware device automatically hinders the GPS feature in running when the end of the time period has been reached.
In the figures 5 to 24 examples of dialog screens according to a preferred embodiment of the system are shown.

With reference to these figures, in the following the major aspects of the OMC are presented and the OMS is also presented through a description of the typical phases in the software-life-cycle of a device. The phases described are:
1. Define a product type
2. Define production templates
3. Produce devices
4. Sell devices
5. Issue licenses to options
6. Define a new software version
7. Define a distribution package
8. Automatic distribution of a software upgrade package
9. Upgrade the software version on a device
10. Issue new licenses to new software features

The software-life-cycle is described for a fictional and very simple device named *Navigation Business Pal* or *NBP* (see figure 5). The NBP is a PocketPC software application. OM Library is integrated into the NBP software.

The OMS is used to control access to the functionality *GPS Search* and *Reports*. When access is prohibited by the OM Library the buttons with the respective names in the NBP application are disabled. When access is granted the buttons are enabled.

### 1. Define a product type

Before the OMS can be used at least one product/device type must be defined in the system. Hence, the first phase in the software-life-cycle of the NBP is to register information about NBP and the related software. Such information will typically be specified and registered by personnel from product management.

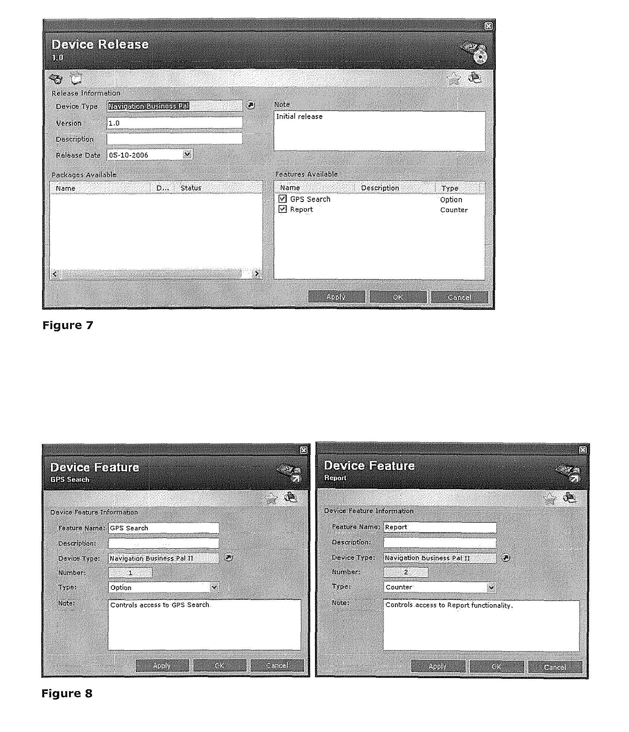

The NBP device type has been registered in the following user interface dialog (UI dialog). The name, description, release date and the features that can be controlled in the particular version of the software (1.0) is defined (see fig. 6). The dialogs displays in fig. 7 and fig. 8 are used to specify the details.

The user interface dialog (fig. 7) is used to specify a specific of potentially multiple software versions released for the NBP device type. Version name is registered and features to control in the given version are selected from a list.

The user interface dialogs (fig. 8) are used to specify details concerning how the OMS will control access to specific functionality. In the two user interface dialogs below the GPS Search feature is specified to be a Yes/NO-option and Report is specified to be a Counter-option.

When the NBP device type (the product type), device release (the related software release) and the features to control has been specified as described above production of devices can begin.

### 2. Define production templates

When a device is produced the device software application is typically installed as one of the last steps in the production process. When the software has been installed on the device the Secure Storage should be initialized to hold the option configuration demanded by the end user (on demand production) or the distributor of the product. Hence, when the product leaves productions a specific combination of features is available, while certain typically are unavailable.

The OMS supports a concept denoted Device Template. A Device Template specifies a given configuration of options that are used when the Secure Storage is initialized during the production process.

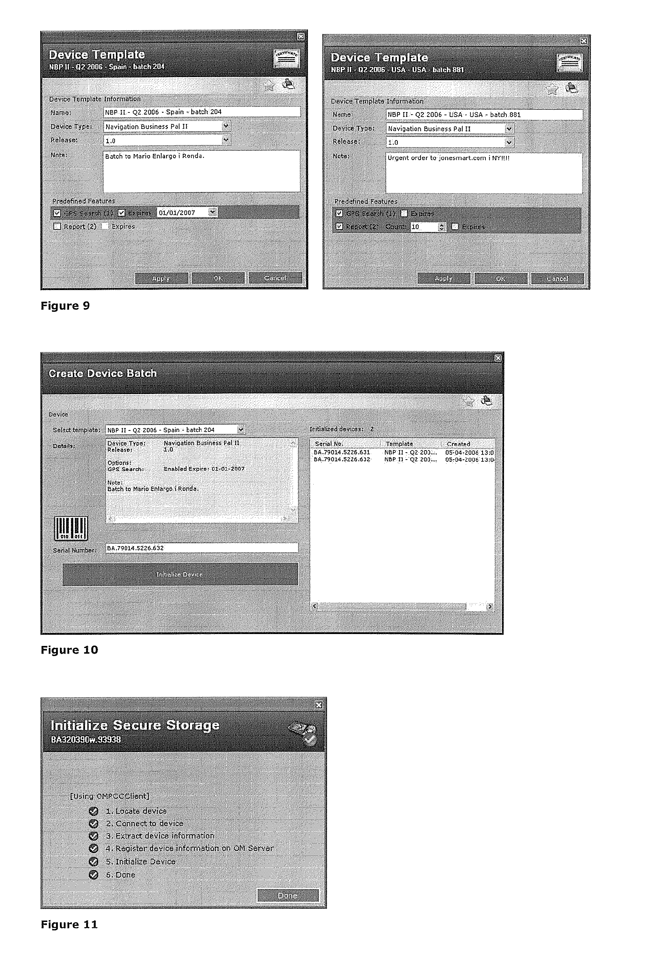

Fig. 9 presents two example Device Templates for the NBP device. The first will initialize the system with version 1.0 software, open for GPS Search functionality time limited to 1-1-2007 and disable Report functionality.

Managers of the production facilities at the device manufacturer typically define such Device Templates. Based on the Device Templates the production employee will initialize the devices with the correct configuration of options.

### 3. Produce devices

The production employee will typically be producing a batch of devices with the same configuration of options. The production employee will select the given Device Template from the UI dialog shown in fig. 10.

Only information to enter in the UI dialog is a serial number for the device produced. When the device is initialized the following actions are performed:
- Extract unique hardware ID from the device
- Store complete device information in the OM Server along with entered serial number
- Generate the Secure Storage for the device
- Install the Secure Storage on the device

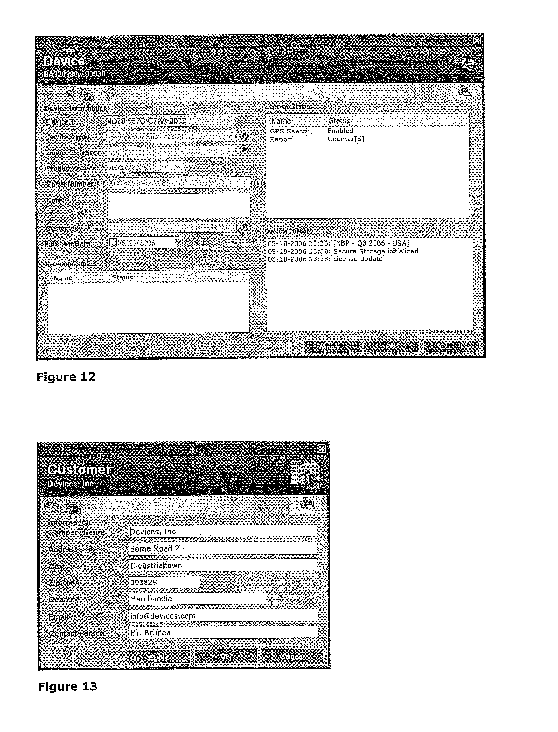

The complex task of correctly initializing the device is through the concept of Device Templates made very simple. The many steps performed are visually presented to the user by the UI dialog shown in fig. 11.

The UI dialog (fig. 12) presents the information that is registered about a device when it has been produced.

The current option status is shown (License Status). Further a Device History is maintained along with Device ID, Serial number, device software version and production date.

### 4. Sell devices

After a NBP has been produced it will at some point be sold to a customer. The OMS can register basic customer information and pair this information with devices purchased by the customer. The UI dialog in fig. 13 shows example information for a fictional customer.

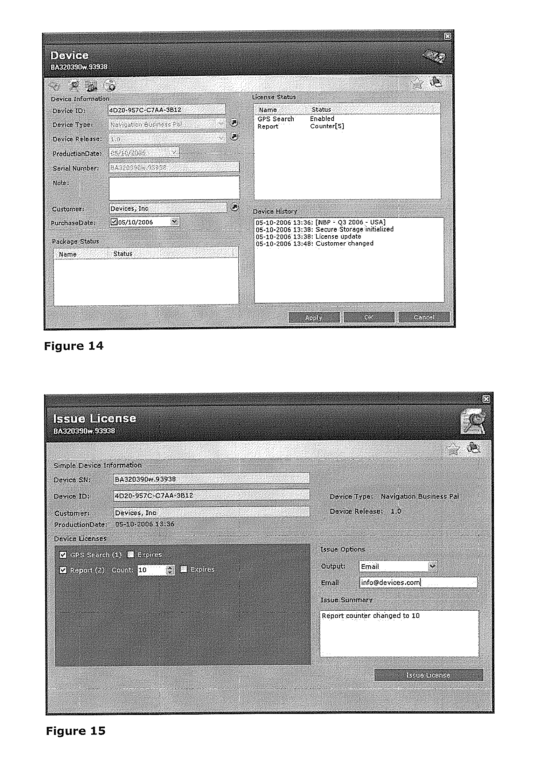

The UI dialog in fig. 14 shows the same dialog as presented in fig. 12, but now customer information as been assigned (Devices, Inc) and the Device History is updated accordingly.

### 5. Issue licenses to features

As times go by the customer uses the NBP. At some point the Report functionality controlled by a Counter-option has been used a number of times and the initial limitation of 5 activations of the Report functionality might be coming to an end. When this occurs the customer will contact the sales representative of the device manufacturer and request a new license to the report functionality. Through the OMS the sales representative will locate the given device, e.g. the device presented in fig. 10.

Through the UI dialog shown in fig. 15 a new license file can be generated, that will open for further activations of the Report functionality.

The license file generated can be distributed through email directly to the NBP device customer, saved locally on the sales persons PC or send to a printer depending on the interfaces available on the NBP through which license files can be imported.

The UI dialogs shown in fig. 14 and fig. 15 are very central to the OMS. These dialogs will be used over and over again whenever customer supports need to know the status of a specific device and whenever sales needs to generate licenses that customers requests.

When licenses are issued integration with back-office ERP systems will ensure that the appropriate invoices are generated to the customer.

### 6. Define a new software version

While version 1.0 of the NBP is sold to customers the development department at the device manufacturer typically continues their work. They most often develop improved versions of the current device types produced. Say software development has finalized an improved version of their NBP device software and denoted the version 1.2. The version contains error-corrections and a new feature denoted Calculation.

This version should be registered in the OM Server by product management, before production can start producing the new version and service technicians can begin the process of upgrading the software at devices already deployed to customers.

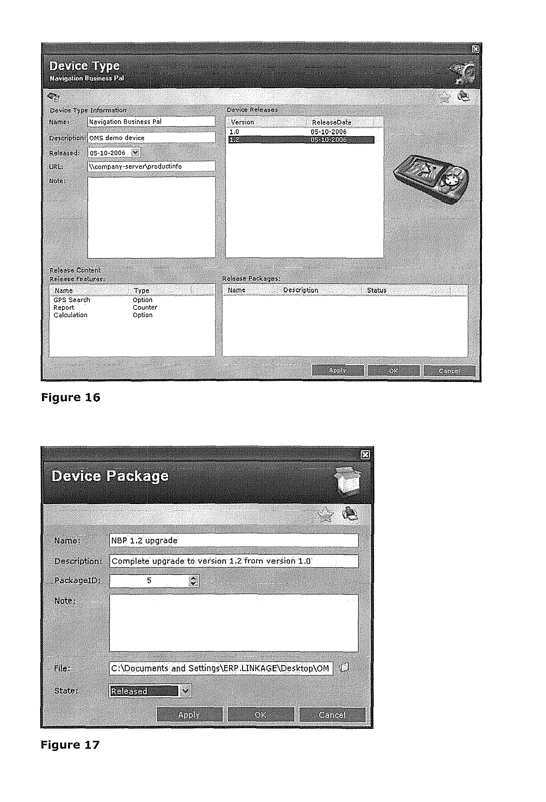

Fig. 16 shows the UI dialog for the NBP device type after the new software version 1.2 has been defined. Over the years all device releases will be registered and for each release the features/options controlled can be viewed. Compare this dialog with fig. 6 to see the difference.

### 7. Define a distribution package

If the device is connected to the Internet, any type of binary file can be distributed from the OM Server to the given device because the OM Library has built-in functionality to check the OM Server for distribution packages available.

A distribution package will most often be a software patch or a new software version.

Distribution packages can be registered in the OM Server related to a given device release. Say we want to register the new NBP device software version 1.2 as a distribution package related to version 1.0 of the software this can be done through the UI dialog in fig. 17.

The state of the distribution package can be chosen between: Planned, Field test, Release and Obsolete. When the Released state is chosen the package will be distributed automatically to every NBP device whenever the devices are online on the Internet and queries the OM Server for new distribution packages.

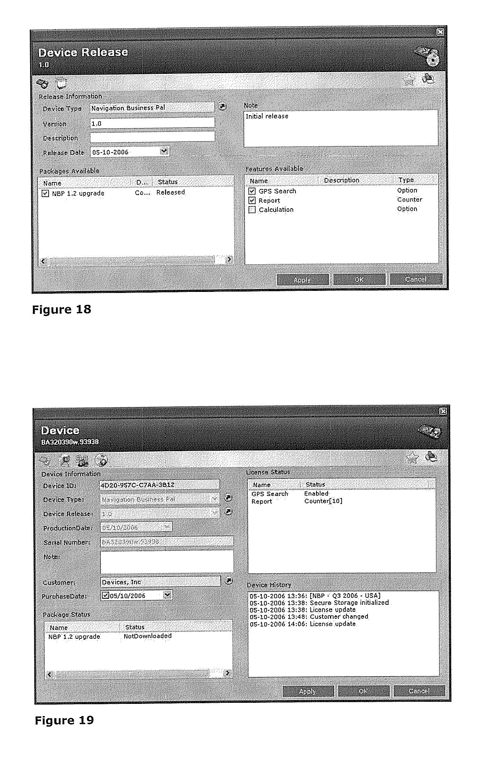

Compare fig. 18 with fig. 7 to see how the upgrade is shown as an available package.

When a distribution package has been defined, this is reflected in the UI dialog for the respective devices as shown in fig. 19. Further the state of the distribution packages for the given device is shown, such as Not Downloaded.

### 8. Automatic distribution of software upgrade package

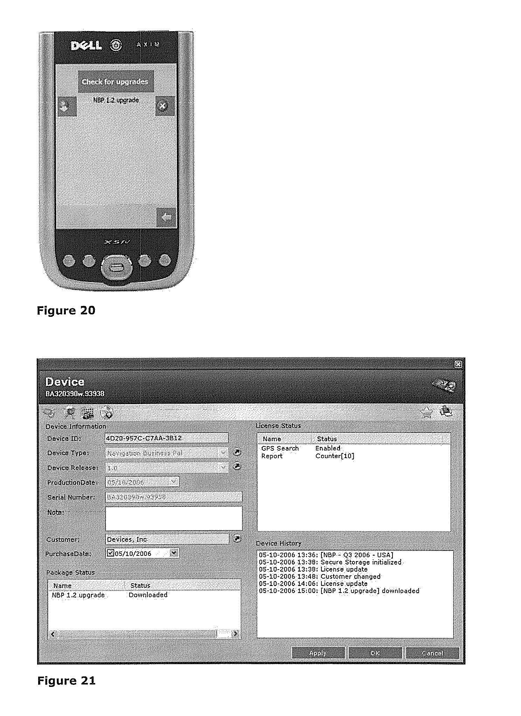

The next time a given NBP device checks for distribution packages, the NBP will indicate that a package is available for download, as shown in fig. 20. The device manufacturer is entirely responsible for the integration of the OM Library distribution functionality in the device. That is, whether download and installation is done e.g. automatically or manually is entirely decided by the device manufacturer. The OMS provides the distribution framework and management system for efficient and controlled distribution of e.g. new software versions.

After a distribution packages has been downloaded it is registered in the OM Server and this is reflected in the UI dialog as shown in fig. 21.

Compare this with dialogs shown in fig. 12, fig. 14 and fig. 19. Note how the Device History is updated with all the changes that occur to the device. This is important information for e.g. customer support at the device manufacturer.

### 9. Upgrade the software version on a device

When the new version 1.2 of the NBP device software has been installed this information will be registered in the OM server the next time a given NBP device has access to the OM Server over the Internet.

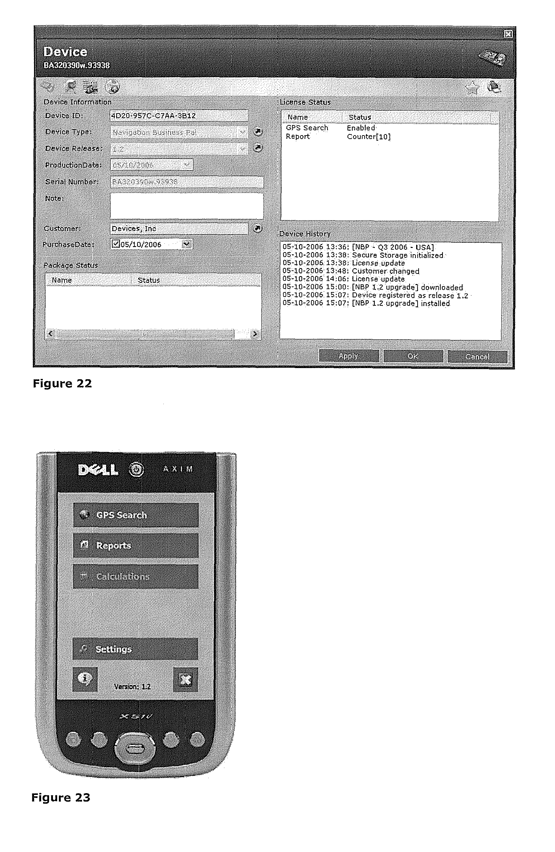

Fig. 22 shows how this fact is reflected in the data stored in the OM Server. Note how the Device Release is now 1.2 and not 1.0 as prior to the upgrade and note that the device history registers that the upgrade has been installed.

Fig. 23 shows the new version of the NBP software installed on the PocketPC. Note that the new feature Calculation is disabled, since a license file hasn't been generated yet. On the other hand a software error has been corrected from version 1.0 to 1.2, i.e. the spelling error "Seattings" has been corrected to "Settings". Hence the OMS facilitates correction of errors without giving away new features for free.

### 10. Issue new licenses to new software features

After the new software version 1.2 of the NBP is distributed either automatically over the Internet or manually by e.g. a service technician the sales department can address the customers and offer them access to the new Calculation feature.

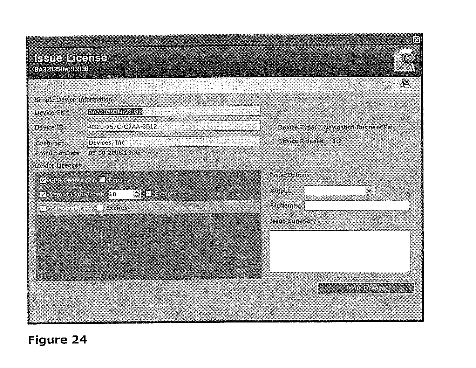

New license files can thus be generated on demand from the UI dialog shown in fig. 24.

In the table below, some of the terms and abbreviations used in the explanatory examples of the invention mentioned above are explained:

| | |
|---|---|
| OM | Option Management. |
| OML or OM Library | Option Management Library. The software library included as part of the device software to allow for access to the license information. |
| OMS | Option Management System. |
| option | A logical feature provided by a device, such as the ability to perform a specific functionality. The feature can be implemented in software only or as a combination of software and hardware functionality. |
| feature or device feature | Used interchangeably with option. In this document the term option is used most often. |
| option type | The kind of option control the OMS offers e.g. based on timed access or number of use. |
| license | A license is the information needed to enable a device feature on a unique device. |
| issue a license | When a license is issued a digital key to unlock a given option in a given device is generated. |
| license import | When a license is imported in a device the given software functionality controlled by the option is unlocked. |
| device | An instrument, machine, analyzer, PC management program, PDA software etc. that a device manufacturer develops, produces and sells. |
| device manufacturer | Develops and produces the given devices. |
| device customer | A customer is a purchaser of one or more devices |
| device type | The device manufacturer often produces distinct device types, e.g. a portable analyzer, a mid-size stationary analyzer and a large scale production analyzer. |
| Secure Storage | Secure storage of currently issued licenses for a given device, i.e. an encrypted and tamper-proof file of license information that is persisted dependent on available device hardware. |

## Claims

1. A management method for the administration of the availability of software modules in a software implementation on a hardware device, said method comprising:
handling device identification and specification of the individual devices and a software option status of each device in an option management server and providing data exchange with the individual hardware devices;
reading and modifying the option status of said software application stored on an individual hardware device in an option management library (OML) by data exchange between said option management library (OML) and said option management server, and storing the option status in license data, such as a license file, in a secured storage on the device.

2. A method according to claim 1, wherein the data exchange between the option management server and said option management library comprises license data, such as a license file.

3. A method according to claim 1 or 2, wherein the data exchange between the option management server and said option management library comprises an additional software application, such as one or more software modules.

4. A method according to any of claims 1 to 3, whereby the secured storage includes encrypting the license data and storing said encrypted license data.

5. A management method according to claim 3, wherein the method for administering the availability of software modules (2) to individual electronic hardware devices (3) comprises the steps of:
- storing electronic hardware device information (4), such as type;
- storing software module information (5), such as version number, content, date of release, and/or the like, for an identification of software modules (2);
- providing a device database (6), comprising individual device identifiers (7) and their corresponding selection of said electronic hardware device information (4) and said software module information (5);
- providing a user interface (102) for at least selecting a software module to be made available to said individual hardware device (3);
- updating said device database to identify the selected software module; and
- providing said selected software module to said specific electronic hardware device.

6. A method according to any of the preceding claims, whereby the step of providing a user interface is adapted for setting of option management parameters of different features of each individual software module provided to said hardware device; and that the updating of said device database includes the option management parameters for the selected software module; and that
said selected software module is provided by providing said option management parameters to said electronic hardware device.

7. A method according to claim 6, wherein said parameters are of different types which are selectable using the user interface, such as option management on/off, counter of time period or number of runs, and/or number of concurrent users of the software module.

8. A method according to claim 6 or 7, further comprising that said provided option management parameters are provided to said electronic hardware device in a secured way, such as by encryption using a security key for unlocking of the control of said option management parameters.

9. A method according to any of the preceding claims, wherein said device database (6) further is comprising identification of the buyer of the individual device, such as an identifier for a customer database in an accounting system.

10. A method according to any of the preceding claims, wherein said device database further is comprising identification of security keys for providing a software module to said individual device.

11. A method according to any of the preceding claims, further enabling comprising license handling for individual users of a hardware device.

12. A management system for the administration of the availability of software modules in a software implementation on a hardware device, said system comprising:
an option management server for handling device identification and specification of the individual devices and a software option status of each device, said server comprising data communication means for data exchange with the individual hardware devices;
a software application stored on an individual hardware device, said application comprising an option management library (OML) for reading and modifying the option status, and storing the option status in license data, such as a license file, in a secured storage, and wherein said option management library (OML) comprises data communication means for data exchange with said option management server.

13. A system according to claim 12, wherein the data exchange between the option management server and said option management library comprises license data, such as a license file.

14. A system according to claim 12 or 13, wherein the data exchange between the option management server and said option management library comprises an additional software application, such as one or more software modules.

15. A system according to any of claims 12 to 14, wherein the secured storage includes encrypting the license data and storing said encrypted license data.

16. A management system according to claim 14, wherein the system for administering the supply of software modules (2) to individual electronic hardware devices (3) comprises:
- means for storing electronic hardware device information (4), such as type;
- means for storing software module information (5), such as version number, content, date of release, and/or the like, for an identification of software modules (2);
- a device database (6) for storing individual device identifiers (7) and their corresponding selection of said electronic hardware device information (4) and said software module information (5);
- a user interface (102) for selecting the software module to be delivered to a specific hardware device (3);
- means for updating said device database to identify the selected software module;
- means for providing said selected software module to said specific electronic hardware device.

17. A system according to claim 16, further comprising that said user interface further comprises means for setting option management parameters of each individual software module provided to said hardware device, and that
said means for updating said device database includes means for updating the option management parameters for the selected software module; and that
said means for providing said selected software module is further adapted to providing said option management parameters to said electronic hardware device.

18. A system according to claim 17, wherein said parameters are of different types, such as option management on/off, counter of time period or number of runs, and/or number of concurrent users of the software module.

19. A system according to any of the claims 16 to 18, wherein said device database (6) further is comprising identification of the buyer of the individual device, such as an identifier for a customer database in an accounting system.

20. A system according to any of the claims 16 to 19, said system further comprising link means (8A, 8B) for the provision of said software modules to said electronic hardware devices.

21. A system according to claim 20, wherein said link means is selected from the group consisting of a data link cable (8A), Internet or Intranet connection (8B), a telephone link, a serial link, a data bus, either physical or wireless, and any combination thereof.

22. A computer program product comprising computer code for carrying out the method according to any of the claims 1 to 11 when said computer program product is run on a computer or processor device.

23. A computer readable medium comprising program code stored thereon for carrying out the method according to any of the claims 1 to 11, when said computer program product is run on a computer or processor device.
